# EUROPÄISCHE PATENTSCHRIFT

(11) **EP 0 619 445 B1**
(45) Veröffentlichungstag und Bekanntmachung des Hinweises auf die Patenterteilung: **27.12.1995**
(21) Anmeldenummer: 93105169.2
(22) Anmeldetag: 29.03.1993
(51) Int. Cl.: F16H 55/06, F16H 55/14, B29D 15/00

(54) **Verfahren zur Herstellung eines auf einer Welle befestigten geräuscharm arbeitenden Zahnrades in Verbundbauweise**
Process for producing a composite gear operating at a low-noise level and secured to a shaftet
Méthode de fabrication d'une roue dentée composite silencieuse et fixée sur un arbre

(43) Veröffentlichungstag der Anmeldung: 12.10.1994
(73) Patentinhaber: SIEMENS AKTIENGESELLSCHAFT, 80333 München (DE)
(72) Erfinder: Gleixner, Ronald, Dipl.-Ing. (FH), D-8703 Ochsenfurt (DE); Pitsch, Christoph, Dipl.-Ing. (FH), D-8706 Höchberg (DE)

(56) Entgegenhaltungen:
- EP-A- 0 218 078
- EP-A- 0 303 113
- DE-A- 3 133 652
- GB-A- 243 518
- US-A- 3 200 665
- PATENT ABSTRACTS OF JAPAN vol. 7, no. 240 (M-251)(1385) 25. Oktober 1983 & JP-A-58128 563 (DAIHATSU KOGYO)

## Beschreibung

Die Erfindung bezieht sich auf ein Verfahren zur Herstellung eines geräuscharm arbeitenden Zahnrades in Verbundbauweise gemäß Oberbegriff des Anspruchs 1; ein derartiges Zahnrad ist aus der DE-U-87 10 903 bekannt.

Nach der DE-C-908 933 ist zur Geräuschminiierung ein Zahnrad in Verbundbauweise aus teilweise metallischem und teilweise nichtmetallischem, geräuschdämpfenden Werkstoff derart aufgebaut, daß eine radial innere, mit einer Welle verbundene Nabe und ein radial äußerer Zahnkranz aus Stahl bestehen und diese beiden Bauteile durch eine zwischenliegende Kunstharz-Preßstoffmasse miteinander verbunden sind; der Zahnkranz ist am äußeren Umfang einer Metallscheibe angeordnet, die sich unterhalb des Zahnkranzes im wesentlichen radial in die Preßstoffmasse, jedoch ohne Verbindung mit der Nabe, erstreckt und dadurch eine bessere Verankerung zwischen dem Zahnkranz und der Kunstharz-Preßstoffmasse gewährleisten soll.

Im bekannten Fall der DE-U-87 10 903 ist zur Geräuschminimierung ein Zahnrad in Verbundbauweise aus zwei verschiedenen Thermoplaststoffen bekannt, bei dem die wellenseitige Nabe aus einem Thermoplast hoher mechanischer Festigkeit, jedoch mit geringem Dämpfungsfaktor und ein auf ihrem äußeren Umfang aufgespritzter Zahnkranz aus einem Thermoplast mit hohem Dämpfungsfaktor jedoch geringer mechanischer Festigkeit vorgesehen ist.

Aufgabe der vorliegenden Erfindung ist es, mit einfachen fertigungstechnischen Mitteln ein Zahnrad herstellen zu können, das sich einerseits betriebsmäßig durch eine hohe Geräuscharmut auszeichnet und andererseits auch die Übertragung größerer Drehmomente mit sicherem Sitz der inneren Nabe auf ihrer an- oder abtreibenden Welle bzw. eine hinreichende mechanische Festigkeit des radial äußeren Zahnkranzes gewährleistet.

Die Lösung dieser Aufgabe gelingt bei einem Zahnrad der eingangs genannten Art durch die Lehre des Anspruchs 1; vorteilhafte Ausgestaltungen der Erfindung sind jeweils Gegenstand der Unteransprüche.

Das erfindungsgemäße geräuscharm arbeitende Zahnrad läßt sich durch Spitzgießen einfach herstellen und gewährleistet trotzdem bei hoher Geräuschdämpfung und langen Betriebs-Dauerstandzeiten eine sichere Übertragung eines Drehmomentes zwischen radial äußerem Zahnkranz einerseits und radial innerer Zahnradwelle andererseits auch bei starken mechanischen Anfahr- bzw. Bremsbelastungen;vorteilhafterweise ist der Außenumfang der Getriebewelle und korrespondierend die wellenseitige Bohrungsfläche des Mitnahmeteils jeweils mit einem von der Rundform abweichenden Profil, insbesondere einer Riffelung, im Sinne einer formschlüssigen Drehmitnahme versehen. In herstellungstechnisch besonders einfacher Weise ist dieses Mitnahmeteil in formschlüssiger Drehmitnahme auf die Getriebewelle axial aufgesteckt und in ihrer Betriebsendlage, z.B. durch entsprechenden Preßsitz, axial fixiert, um anschließend als derart vorgefertigte Bauteileinheit von dem ersten Nabenteil umspritzt werden zu können.

Durch die JP-A-58 128563 ist ein Zahnrad bekannt, bei dem eine radial innere Buchse an ihrem Außenumfang von einem ersten felgenartigen Kunststoffteil formschlüssig umgriffen wird, das axial mit einem zweiten Kunststoffteil mit einem außenumfangsseitigen Zahnkranz kontaktiert ist; zur sicheren Drehmitnahme zwischen den beiden Kunststoffteilen greift das zweite Kunststoffteil mit angegossenen axial vorstehenden Stiften in korrespondierende axiale Stiftöffnungen des anderen Kunststoffteils.

Durch die EP-A-218 078 ist eine Riemenscheibe bekannt, bei der eine außenumfangsseitige Lauffläche über Speichen mit einer radial inneren, eine Armierungshülse zur Befestigung auf einer Welle aufnehmenden Nabe verbunden und ein Dämpfungselement zwischen Lauffläche und Nabe drehfest gehalten ist; Lauffläche, Speichen und Nabe sind einstückig aus einem härteren und das Dämpfungselement aus einem weicheren polymeren Werkstoff gefertigt.

Zur weiteren Erhöhung einer Momentanübertragbarkeit ist vorgesehen, das erste Nabenteil durch formschlüssiges Um- bzw. Einspritzen mit dem Mitnahmeteil bzw. dem zweiten Nabenteil durch formschlüssiges tangentiales Umgreifen bzw. axiales Übergreifen zu verankern.

Die Erfindung sowie weitere vorteilhafte Ausgestaltungen der Erfindung werden im folgenden anhand eines schematisch dargestellten Ausführungsbeispiels in der Zeichnung näher erläutert; darin zeigen:

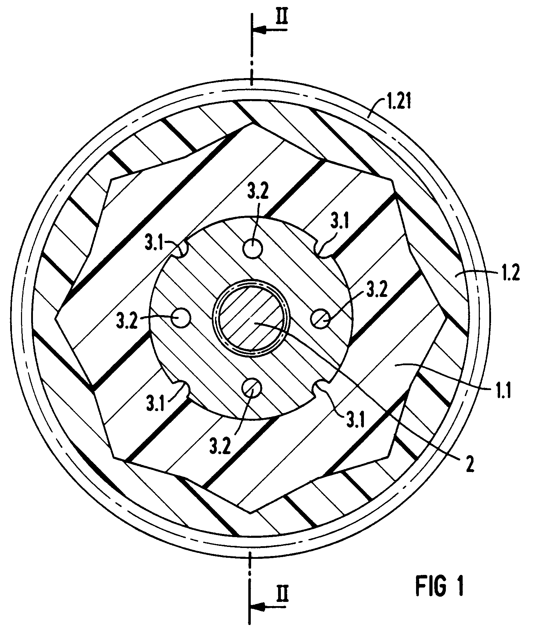

- FIG.1: in einem radialen Schnittbild ein auf einer Getriebwelle fixiertes Zahnrad in Verbundbauweise

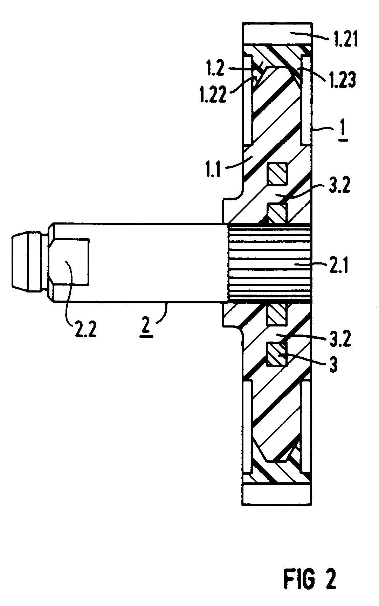

- FIG.2: das Zahnrad gemäß FIG.1 im Schnittverlaut II-II

Die Zeichnungen zeigen ein in Verbundbauweise aufgebautes Zahnrad 1, das als Schneckenrad eines Getriebemotors zum Antrieb eines Kraftfahrzeug-Schiebedachantriebes in Drehmitnahme mit einer Getriebewelle 2 steht, die über ein Kupplungsteil 2.2 an ihrem linken freien Ende auf ein Abtriebsritzel für den übrigen Antriebsmechanismus des Schiebedaches ankoppelbar ist. In den Zahnkranz 1.21 des Schnekkenrades greift in hier nicht gezeigter Darstellung eine Schneckenwelle ein, die auf dem freien Wellenende eines für den Kraftfahrzeug-Schiebedachantrieb vorgesehenen Kommutatormotors angeordnet ist.

Zur betriebsmäßigen Geräuschdämmung des Zahnrades 1 einerseits und zur hohen mechanischen Festigkeit der Drehmomentenübertragung zwischen der Schneckenwelle und dem Zahnkranz 1.21 ist erfindungsgemäß das äußere Nabenteil 1.2 mit dem eingeformten Zahnkranz 1.21 aus einem Thermoplast hoher mechanischer Festigkeit, jedoch mit geringerem Dämpfungsfaktor und das innere Nabenteil 1.1 aus einem Thermoplast mit hohem Dämpfungsfaktor, jedoch geringerer mechanischer Festigkeit gebildet. Beide Habenteile 1.1 bzw. 1.2 sind als einfache Spritzgußteile hergestellt, wobei in vorteilhafter Weise das äußere Habenteil 2.1 mit dem Zahnkranz 1.21 auf das zuvor gespritzte und verfestigte erste Nabenteil 1.1 aufgespritzt ist.

Zur Erhöhung der Drehmomentenübertragbarkeit zwischen der Getriebewelle 2 einerseits und dem ersten Nabenteil 1.1 andererseits ist das erste Nabenteil 1.1 auf ein Mitnahmeteil hoher mechanischer Festigkeit, insbesondere eine Metall-Mitnahmescheibe (3), aufgespritzt, die ihrerseits im Sinne eines hohen Mitnahmemomentes auf der Getriebewelle 2 zumindest in tangentialer Richtung formschlüssig gehalten und axial im Preßsitz fixiert ist; dazu ist nach einer Ausgestaltung der Erfindung der Außenumfang der Getriebewelle 2 zur formschlüssigen Drehmitnahme mit der Mitnahmescheibe 3 bzw. dem gegebenenfalls auch auf die Getriebewelle 2 mitaufgespritzten ersten Nabenteil 1.1 mit einem von der Rundform abweichenden Profil, insbesondere einer Riffelung 2.1, versehen.

Die Verbindung zwischen der Mitnahmescheibe 3 einerseits und dem ersten Nabenteil 1.1 andererseits wird durch eine formschlüssige gegenseitige Verankerung erhöht; dazu ist im dargestellten Ausführungsbeispiel die Mitnahmescheibe 3 mit über den Umfang verteilten Einkerbungen 3.1 bzw. über ihre Stirnflächen verteilten Bohrungen 3.2 versehen, in die Thermoplastmaterial des ersten Nabenteils 1.1 beim Aufspritzen eindringen kann.

Zur zusätzlichen axialen bzw. tangentialen Verankerung zwischen dem ersten Nabenteil 1.1 und den zweiten Nabenteil 1.2 ist dieses mit nach radial innen gerichteten Schultern 1.22;1.23 versehen, die axial stirnseitig an dem ersten Nabenteil 1.1 anliegen, bzw. weist der Außenumfang des ersten Nabenteils 1.1 im Sinne einer tangentialen Verankerung mit dem zweiten Nabenteil eine von der Rundform abweichende Kontur auf.

## Patentansprüche

1. Verfahren zur Herstellung eines auf einer Welle befestigten, geräuscharm arbeitenden Zahnrades in Verbundbauweise, insbesondere eines auf einer Getriebewelle eines Getriebemotors befestigten Schneckenrades, **dadurch gekennzeichnet, daß** ein erstes wellenseitiges Nabenteil (1.1) des Zahnrades (1) aus einem Thermoplast mit hohem Dämpfungsfaktor und geringerer mechanischer Festigkeit und ein mit dem ersten Nabenteil (1.1) verbundenes zweites äußeres Nabenteil (1.2) mit einem Zahnkranz (1.21) aus einem Thermoplast hoher mechanischer Festigkeit und mit geringerem Dämpfungsfaktor vorgesehen werden, und daß das erste Nabenteil (1.1) auf ein Mitnahmeteil im Sinne dessen Einbettung aufgespritzt wird, wobei das Mitnahmeteil eine hohe mechanische Festigkeit aufweist und im Sinne eines hohen Mitnahmemomentes auf der Welle (2) fixiert und mit dem aufgespritzten ersten Nabenteil (1.1) formschlüssig verankert wird.

2. Verfahren nach Anspruch 1, **dadurch gekennzeichnet,** daß das Mitnahmeteil als eine Metall-Mitnahmescheibe (3) ausgebildet wird.

3. Verfahren nach Anspruch 1 oder 2, **dadurch gekennzeichnet,** daß die Verankerung des ersten Nabenteiles (1.1) durch Einspritzen in randseitige Einkerbungen (3.1) und/oder stirnseitige Bohrungen (3.2) des Mitnahmeteils erfolgt.

4. Verfahren nach einem der Ansprüche 1 - 3, **dadurch gekennzeichnet,** daß der Außenumfang der Welle (2) zur formschlüssigen Drehmitnahme mit dem Mitnahmeteil bzw. dem ersten Nabenteil (1.1) mit einem von der Rundform abweichenden Profil versehen wird.

5. Verfahren nach einem der Ansprüche 1 - 4, **dadurch gekennzeichnet,** daß das erste Nabenteil (1.1) auf eine aus der Welle (2) und dem auf diese aufgesteckten Mitnahmeteil gebildete Bauteileinheit aufgespritzt wird.

6. Verfahren nach einem der Ansprüche 1 - 5, **dadurch gekennzeichnet,** daß das zweite Nabenteil (1.2) als auf das erste Nabenteil (1.1) nach dessen Aushärtung aufgespritztes Bauteil ausgebildet wird.

7. Verfahren nach einem der Ansprüche 1 - 5, **dadurch gekennzeichnet,** daß das erste Nabenteil (1.1) mit dem zweiten Nabenteil (1.2) verklebt wird.

8. Verfahren nach einem der Ansprüche 1 - 7, **dadurch gekennzeichnet,** daß das zweite Nabenteil (1.2) durch formschlüssiges Übergreifen bzw. Umgreifen mit dem ersten Nabenteil (1.1) zumindest axial bzw. tangential verankert wird.

9. Verfahren nach Anspruch 8, **dadurch gekennzeichnet,** daß das zweite Nabenteil (1.2) mit nach radial innen ragenden Schultern (1.22;1.23) an den Stirnseiten des ersten Nabenteils (1.1) angelegt wird.

10. Verfahren nach einem der Ansprüche 1 - 9, **dadurch gekennzeichnet,** daß das Zahnrad auf der Welle (2) in Form einer Getriebewelle eines motorischen Kraftfahrzeug-Schiebedachantriebs fixiert wird, die abtriebsseitig mit einem Kupplungsteil (2.2) zur Ankopplung an den Schiebedachantrieb versehen wird.

## Claims

1. Method for the production of a composite gear operating at a low noise level and secured to a shaft, in particular a worm gear secured to a transmission shaft of a geared motor, characterized in that a first, shaft-side hub part (1.1) of the gear (1) composed of a thermoplastic with a high damping factor and a relatively low mechanical strength and a second, outer hub part (1.2) connected to the first hub part (1.1), having a toothed rim (1.21) and composed of a thermoplastic of high mechanical strength and with a lower damping factor are provided, and in that the first hub part (1.1) is moulded onto a driving part in such a way as to embed it, the driving part having a high mechanical strength and being fixed on the shaft (2) in such a way as to give a high driving torque and being anchored positively to the moulded-on first hub part (1.1).

2. Method according to Claim 1, characterized in that the driving part is designed as a metal driving disc.

3. Method according to Claim 1 or 2, characterized in that the anchoring of the first hub part (1.1) is accomplished by injection into notches (3.1) at the rim and/or into holes (3.2) in the faces of the driving part.

4. Method according to one of Claims 1-3, characterized in that to ensure that it is driven in rotation with a positive fit with the driving part or with the first hub part (1.1), the outer circumference of the shaft (2) is provided with a profile which deviates from the circular.

5. Method according to one of Claims 1-4, characterized in that the first hub part (1.1) is moulded onto a subassembly formed by the shaft (2) and the driving part mounted on the latter.

6. Method according to one of Claims 1-5, characterized in that the second hub part (1.2) is designed as a component which is moulded onto the first hub part (1.1) after the latter has cured.

7. Method according to one of Claims 1-5, characterized in that the first hub part (1.1) is bonded to the second hub part (1.2).

8. Method according to one of Claims 1-7, characterized in that the second hub part (1.2) is anchored at least axially or tangentially to the first hub part (1.1) by fitting positively over or around it.

9. Method according to Claim 8, characterized in that the second hub part (1.2) is rested on the faces of the first hub part (1.1) by means of shoulders (1.22; 1.23) which project radially inwards.

10. Method according to one of Claims 1-9, characterized in that the gear is fixed on the shaft (2) in the form of a transmission shaft of a motorized motor-vehicle sliding-roof drive, the shaft being provided on the output side with a coupling part (2.2) to allow it to be coupled to the sliding-roof drive.

## Revendications

1. Procédé de fabrication d'un pignon fixé à un arbre et travaillant sans bruit, selon un mode de réalisation composite, notamment une roue à denture hélicoïdale fixée sur un arbre de transmission d'un moto-réducteur, caractérisé par le fait qu'il est prévu une première partie de moyeu (1.1) du pignon (1), située du côté de l'arbre et en une matière thermoplastique ayant un grand facteur d'amortissement et une résistance mécanique plus petite, et une seconde partie de moyeu (1.2) extérieure, reliée à la première partie de moyeu (1.1) et comportant une couronne dentée (1.21) en une matière thermoplastique ayant une grande résistance mécanique et un facteur d'amortissement plus petit, et que la première partie de moyeu (1.1) est moulée par injection sur une partie d'entraînement, de manière à enrober cette dernière, la partie d'entraînement ayant une grande solidité mécanique et étant fixée à l'arbre (2) en vue de l'obtention d'un grand couple d'entraînement et étant ancrée selon une liaison par formes complémentaires à la première partie de moyeu (1.1) moulée par injection.

2. Procédé suivant la revendication 1, caractérisé par le fait que la partie d'entraînement est agencée sous la forme d'une poulie métallique d'entraînement (3).

3. Procédé suivant la revendication 1 ou 2, caractérisé par le fait que l'ancrage de la première partie de moyeu (1.1) s'effectue par moulage par injection dans des encoches marginales (3.1) et/ou dans des perçages frontaux (3.2) de la partie d'entraînement.

4. Procédé suivant l'une des revendications 1-3, caractérisé par le fait que la circonférence extérieure de l'arbre (2) est, pour l'entraînement en rotation, selon une liaison par formes complémentaires, avec la partie d'entraînement ou avec la première partie de moyeu (1.1), munie d'un profil qui diffère de la forme circulaire.

5. Procédé suivant l'une des revendications 1-4, caractérisé par le fait que la première partie de moyeu (1.1) est moulée par injection sur une unité constituée de l'arbre (2) et de la partie d'entraînement emmanchée sur cet arbre.

6. Procédé suivant l'une des revendications 1-5, caractérisé par le fait que la seconde partie de moyeu (1.2) est constituée sous la forme d'un élément moulé par injection sur la première partie de moyeu (1.1), après son durcissement.

7. Procédé suivant l'une des revendications 1-5, caractérisé par le fait que la première partie de moyeu (1.1) est collée à la seconde partie de moyeu (1.2).

8. Procédé suivant l'une des revendications 1-7, caractérisé par le fait que la seconde partie de moyeu (1.2) est ancrée au moins axialement ou tangentiellement par enveloppement, selon une liaison par formes complémentaires, avec la première partie de moyeu (1.1).

9. Procédé suivant la revendication 8, caractérisé par le fait que la seconde partie de moyeu (1.2) s'applique, par des épaulements (1.22; 1.23) qui s'étendent radialement vers l'intérieur, aux faces frontales de la première partie de moyeu (1.1).

10. Procédé suivant l'une des revendications 1 à 9, caractérisé par le fait que le pignon est fixé sur l'arbre (2) sous la forme d'un arbre de transmission d'un dispositif d'entraînement motorisé de toit coulissant de véhicule automobile, qui comporte, sur le côté menée, une pièce d'accouplement (2.2) pour l'accouplement au dispositif d'entraînement du toit coulissant.
